# EUROPEAN PATENT SPECIFICATION

(11) **EP 2 882 275 B1**
(45) Date of publication and mention of the grant of the patent: **30.09.2020**
(21) Application number: 13828395.7
(22) Date of filing: 06.08.2013
(51) Int. Cl.: A01D 34/73, A01D 34/416

(54) **RAMPED CONNECTOR FOR ROTARY HEAD ASSEMBLY**
RAMPENFÖRMIGER VERBINDER FÜR DREHKOPFANORDNUNG
RACCORD INCLINÉ POUR ENSEMBLE-TÊTE ROTATIF

(30) Priority: 09.08.2012 US 201261681304 P
(43) Date of publication of application: 17.06.2015
(73) Proprietor: Jerez, Orlando, Kenner, LA 70065 (US)
(72) Inventor: Jerez, Orlando, Kenner, LA 70065 (US)
(74) Representative: Sommer, Andrea
(86) International application number: PCT/US2013/053801
(87) International publication number: WO 2014/025789

(56) References cited:
- GB-A- 2 299 923
- US-A- 4 065 913
- US-A- 5 048 278
- US-A- 5 433 006
- US-A- 5 836 227
- US-A- 5 979 064
- US-A- 6 108 914
- US-B2- 7 000 324

## Description

### TECHNICAL FIELD

This invention relates to rotary head assembly apparatuses, and more specifically, to rotary head assembly apparatus configured to easily replace cutting members necessary to cut unwanted plants.

### BACKGROUND

Presently, there are trimming apparatuses known in the art having a rotatable, attachable head for attachment to a powered device, with the head carrying a series of trimmer lines extending axially out about the periphery of the head. Examples of such weed trimming apparatuses include spool and "bump 'n' feed" weed trimming apparatuses with continuous-feed trimming line, automatic-feed trimmer head, and trimming apparatuses using fixed-length pieces of trimming line or blades. However, such weed trimming apparatuses have certain drawbacks which have gone largely unaddressed in this technical field.

Both the "bump 'n' feed" and automatic trimmer head relies on an internal spool with trimmer line reserves. Stress on these apparatuses' trimming lines will cause it break from time to time during use. Because of their designs, the trimmer lines often get twisted, tangled or buried within the spool making it difficult to dispense the proper line length for cutting. As a result, the trimmer head must then be disassembled, the trimmer string unwound and again rewound in the proper manner before the trimmer head will again work as designed. This process is difficult, labor intensive and highly time consuming.

To address the aforementioned problems of the conventional "bump 'n' feed" and automatic trimmer heads, blades or fixed-length trimmer line pieces have been incorporated into the trimmer head. As the blades become dull or the trimmer lines break, often times, it require additional tools and/or a lot of time to replace the worn or broken pieces. Thus, a need exists for a rotary apparatus that does not tangle, twist, or bind cutting members such as the trimmer lines. Furthermore, a need exists for a rotary apparatus that does not have to be disassembled to have new strings or other types of cutting members added. Lastly, a need exists for a rotary apparatus which requires little time and effort to replace the cutting members such as trimmer lines or cutting blades. These needs are met by the present invention as described and claimed below.

US 4,065,913 is directed to a safe cutter disc assembly for a rotary lawn mower. It discloses a safe cutter disc assembly for a rotary lawn mower in which the disc has a circular central portion and an annular outer portion joined by a shallow vertically extending wall having a plurality of radially extending openings. The cutting elements are in the form of cutter pins inserted in the openings, each pin in the preferred embodiment being formed of durable plastic having a head, a relatively stiff shank and a long tapering flexible tip portion, the pins being supported cantilever fashion with respect to the openings. The annular outer portion of the disc closely underlies and protects the relatively stiff shank portions of the pins while the tips of the pins project beyond the periphery of the disc into engagement with the grass, bending back into the projection of the outer portion of the disc upon striking of an obstruction. Adjacent each of the openings is provided a backstop in the form of an upstanding radial vane having a retreating curvature for engaging and providing lengthwise-distributed support for the associated pin during its backward bend. In an alternate version a pin having shank and tip portions of substantially equal diameter is used.

### SUMMARY OF THE INVENTION

It is the object of the present invention to provide an improved apparatus comprising a rotary head assembly, that provides quick and easy insertion of a cutting member in order to resume operation as well as simple and efficient removal of the cutting member when replacing it. The object is solved by independent claim 1. Dependent claims are directed to advantageous embodiments.

The present invention addresses the foregoing need, amongst other needs, in a highly unique and facile way. Thus, in one aspect, the present invention provides a novel rotary apparatus, particularly a rotary head assembly from which a cutting member may extend. Particularly, in at least one of its aspects, this invention provides quick and easy insertion of a cutting member in order to resume operation of the rotary apparatus. In another aspect, the invention also facilitates removal of a cutting member during change out, so that there is no need to disassemble the rotary head assembly of the rotary apparatus, as required in other known trimmer apparatuses. The cutting member of the present invention can be flexible (e.g. wires, strands, etc.), semi-rigid (e.g. plastic blades), or rigid (e.g. metal blades) and may be made of any material and in any shape capable of cutting unwanted plants such as weeds. Non-limiting examples of cutting member materials include plastics (e.g. nylon), metals, metal alloys, and combinations thereof.

This invention provides a rotary apparatus comprising a rotary head assembly configured for attachment to a rotary power source, wherein the rotary head assembly has at least one cutting member receptacle wherein said cutting member receptacle optionally rotates or is fixed onto the rotary head assembly, defines at least one cutter inlet and at least one cutter outlet, wherein the cutter inlet is positioned opposite the cutter outlet and sized and configured to receive at least one cutting member and comprises a cutting member retainer wherein the cutting member retainer is positioned in between the cutter inlet and the cutter outlet defines a channel extending from the cutter inlet to the cutter outlet and comprises a ramp surface which is either declining or inclining, relative to a point of entry into the inlet, so that the cutting member may be inserted into the cutter inlet and engaged with the cutting member retainer and retained by the cutting member receptacle until it is threaded through the cutter outlet, characterized in that the ramp surface (28) comprises at least two side edges (65) configured and sized to define at least two side channels (70) extending from the cutter inlet (18) to the cutter outlet (20) sufficient to receive a cutting member (22) through the cutter inlet (18) and retain the cutting member (22) within the cutting member retainer (24) when in use and release the cutting member (22) when threaded through the cutter outlet(20).

These and other features of this invention will be still further apparent from the ensuing description, drawings, and appended claims.

### BRIEF DESCRIPTION OF THE DRAWINGS

Fig. 1 are perspective views and a cross-sectional view of the rotary head assembly, the cutting member receptacle, and the cutting members consistent with one aspect of the present invention.
Fig. 2 is a cross-sectional view of the rotary head assembly of Fig. 1.
Fig. 3 is a cross-sectional view of the rotary head assembly, the cutting member receptacle consistent with one aspect of the present invention.
Fig. 4 is a cross-sectional view of the cutting member receptacle included within Fig. 3.
Fig. 5 are perspective views and a cross-sectional view of the cutting member receptacle.
Fig 5a are exemplary embodiments of the cutting member retainer.
Fig. 6 is a perspective view of the rotary head assembly, the cutting member receptacle, and the cutting members consistent with one aspect of the present invention.
Fig. 6a are perspective views and a cross-sectional view of the cutting member receptacle included in Fig. 6.
Fig. 7 is a perspective view and a cross-sectional view of the cutting member receptacle.
Fig. 8 is a cross-sectional view of the cutting member receptacle.
Fig. 9 are perspective views of the cutting member receptacle.

In each of the above figures, like numerals are used to refer to like or functionally like parts among the several figures.

### FURTHER DETAILED DESCRIPTION OF THE INVENTION

Illustrative implementations of the invention are described below as they might be employed in the construction and use of a rotary apparatus and related method according to at least one implementation of the present invention. It will be of course appreciated that in the development of such an actual implementation, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure. In the detailed description below, general discussion of alternative steps, configurations, features and/or components may employ reference to numbered components identified in the accompanying figures. However, it should be appreciated that, unless otherwise explicitly noted, such alternative steps, configurations, features and/or components are not necessarily limited to the particular aspect illustrated in the relevant figures, as the use of such number references in this context is merely for the sake of clarity.

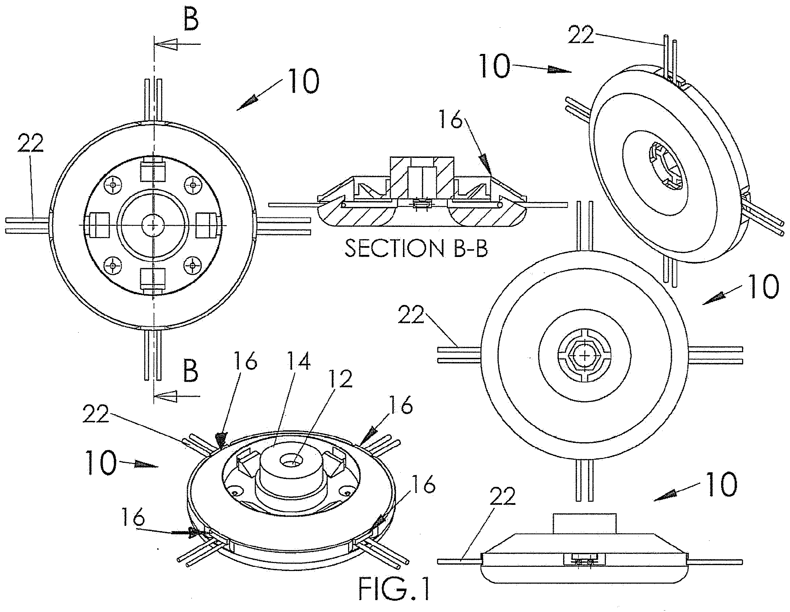

Turning now to the Figures, several illustrative aspects of the apparatus of the present invention are shown. Looking now at Fig. 1, an apparatus comprising a rotary head assembly **10** configured for attachment to a rotary power source (not shown) is shown. The rotary power source may be any source capable to provide sufficient rotation to cut unwanted plants such as weeds. Non-limiting examples of the rotary power source includes any gas-powered, electric-powered, or battery-powered motor found on any standard commercial weed trimming device, such as a "weedeater." The rotary head assembly **10** is sized and configured for attachment to such commercially known weed trimming devices through the use of an attachment member such as a clamp, bolt, or threaded screw (not shown) through the central member aperture **12** defined by the central member **14** of the rotary head assembly.

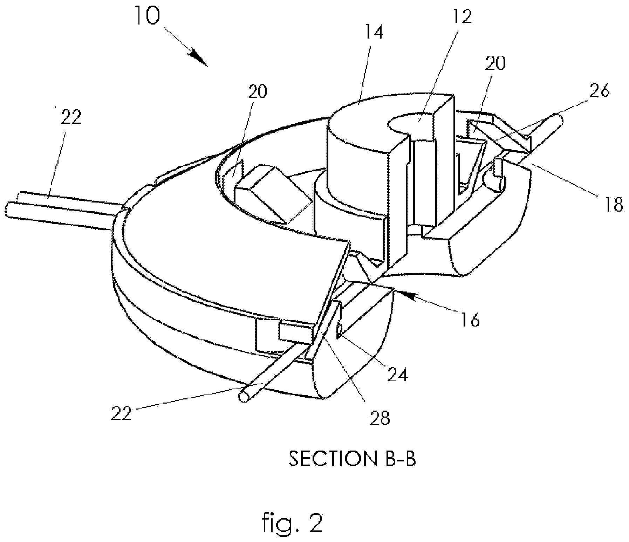

According to the invention, the invention comprises the rotary head assembly **10,** as illustrated in Figs. 1 and 2, wherein the rotary head assembly has at least one cutting member receptacle **16** wherein said cutting member receptacle is fixed onto the rotary head assembly **10,** defines at least one cutter inlet **18** and at least one cutter outlet **20,** wherein the cutter inlet is positioned opposite the cutter outlet and sized and configured to receive at least one cutting member **22** and comprises a cutting member retainer **24** wherein the cutting member retainer is positioned in between the cutter inlet and the cutter outlet comprising a channel **26** extending from the cutter inlet forming a ramp surface **28** which is inclining as shown, but may be optionally configured to be declining, relative to the cutter inlet, so that the cutting member **22** may be inserted into the cutter inlet **18** and engaged with the cutting member retainer **24** and retained by the cutting member receptacle **16** until it is threaded through the cutter outlet **20** The ramp surface **28** comprises at least two side edges **65.** The side edges **65** are configured and sized to define at least two side channels **70** extending from the cutter inlet to the cutter outlet **20** sufficient to receive a cutting member through the cutter inlet and retain the cutting member within the cutting member retainer **24** when in use and release the cutting member when threaded through the cutter outlet **20.**

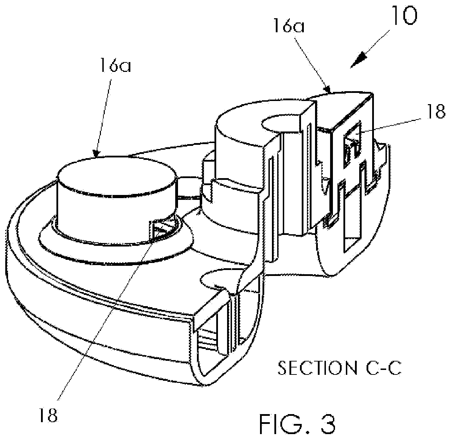

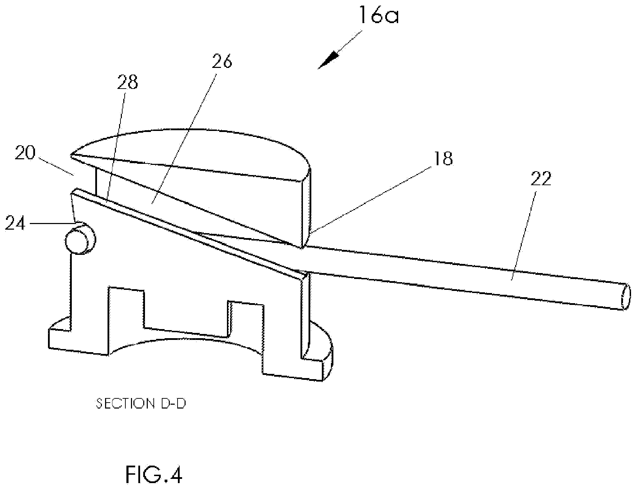

As illustrated in Figs. 3 and 4, the invention of another embodiment comprises the rotary head assembly **10,** defines at least one cutting member receptacle **16a** configured to rotate in the same and opposite direction of the rotary head assembly during use, defines at least one cutter inlet **18** and at least one cutter outlet **20,** wherein the cutter inlet is positioned opposite the cutter outlet and sized and configured to receive at least one cutting member **22** and comprises a cutting member retainer **24** wherein the cutting member retainer is positioned in between the cutter inlet and the cutter outlet comprising a channel **26** extending from the cutter inlet forming a ramp surface **28** which is inclining as shown, but may be optionally configured to be declining, relative to the cutter inlet, so that the cutting member **22** may be inserted into the cutter inlet **18** and engaged with the cutting member retainer **24** and retained by the cutting member receptacle **16a** until it is threaded through the cutter outlet **20.**

The cutting member receptacle of the present invention may be spatially arranged in any configuration on, in, or combinations thereof with the rotary head assembly. In another embodiment, the cutting member receptacle may be configured as part of the rotary head assembly or as removable attachments. In yet another embodiment, the rotary head of the present invention may be configured to receive a single cutting member receptacle or a plurality of the cutting member receptacle. In yet a further embodiment, where there are at least two cutting member receptacles, each cutting member receptacle may be spatially arranged in any configuration relative to the other, non-limiting examples include, above, below, opposite, next to, within, or combinations thereof.

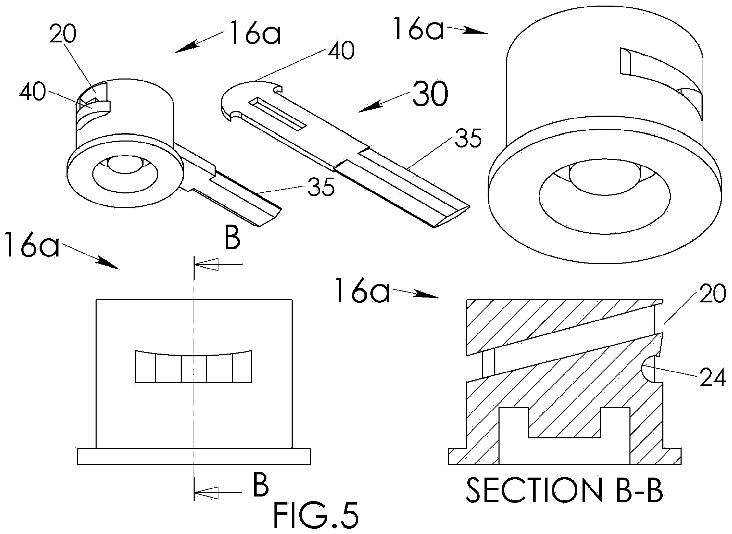

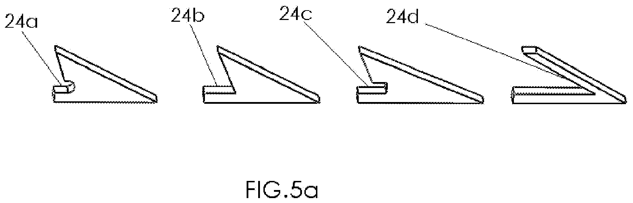

As shown in Fig. 5, the cutting member receptacle **16a** portion of the present invention may form various shapes and configurations. In one embodiment, one skilled in the art may shape and configure the cutting member receptacle **16a** to receive different types of cutting member such as a cutting member shaped like a blade **30,** wherein said cutting member of this embodiment has a cutting portion **35** and an attachment portion **40** configured to engage and be retained with the cutting member retainer **24** until the cutter member as exemplified by the blade **30** is threaded through the cutter outlet **20.** Fig. 5a illustrates various examples of the cutting member retainer embodiments **24a, 24b, 24c,** and **24d.** In one embodiment, the cutting member retainer **24** may be formed similar to a shape of the a portion of the cutting member's exterior and sized to receive it, non-limiting shapes include circular **24a,** angular **24b** and **24d,** rectangular **24c,** oval, combinations thereof, or any shape capable of retaining the cutting member. In another embodiment, the cutting member retainer **24** comprises a concave space below the cutter outlet **20.**

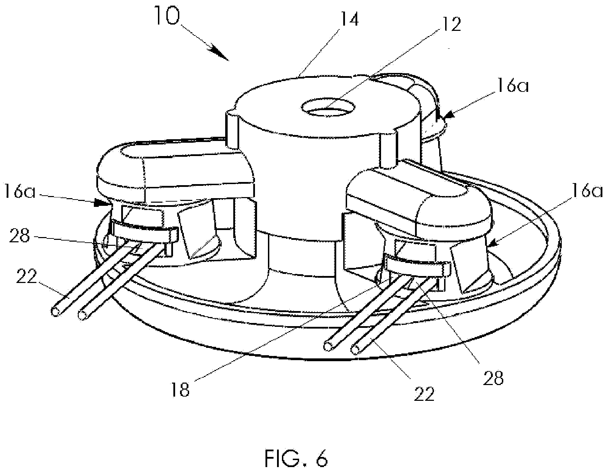

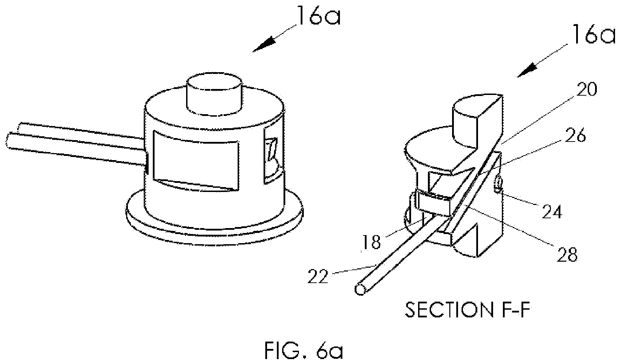

In one embodiment as illustrated in Figs. 6 and 6a, a cutting member receptacle **16a** configured to receive cutting members **22** such as those that are commercial available such as flexible monofilament plastic trimmer lines of any suitable type and cross-sectional configuration, e.g., 0.065, 0.080, 0.095, 0.105, 0.12, 0.13 or 0.15 gauge nylon trimmer line or the like. In a further embodiment, the cutting member receptacle **16a** configured to receive a cutting member, such as a trimmer line **22** as exemplified in Fig. 6a. In particular, the cutting member receptacle **16a** defines at least one cutter inlet **18** and at least one cutter outlet **20,** wherein the cutter inlet is positioned opposite the cutter outlet and sized and configured to receive at least one cutting member **22,** and comprises a cutter member retainer **24** wherein the cutter member retainer is positioned in between the cutter inlet and the cutter outlet comprising a channel **26** extending from the cutter inlet forming a ramp surface **28** which is declining or inclining relative to the cutter inlet, so that the cutting member **22** may be inserted into the cutter inlet and engaged with the cutter member retainer and retained by the cutter member retainer until it is threaded through the cutter outlet.

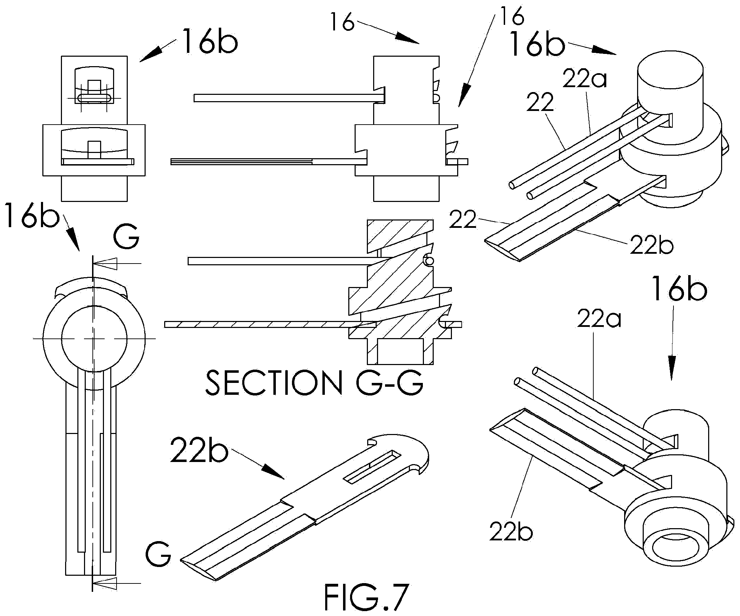

In another embodiment, as illustrated in Fig. 7, the cutting member receptacle **16b** is configured to be on top of another cutting member receptacle. In yet a further embodiment, the rotary apparatus of the present invention may be configured with a singular cutting member or a plurality of cutting members **22,** as exemplified in Fig. 7, wherein the cutting members may be the same material, same shape, same texture, different material, different shape, different texture, or combinations thereof from each other. As illustrated in Fig. 7, the cutting member receptacle comprises at least one cutting member **22a** which is a flexible trimmer line and at least one cutting member which is a blade-like **22b.**

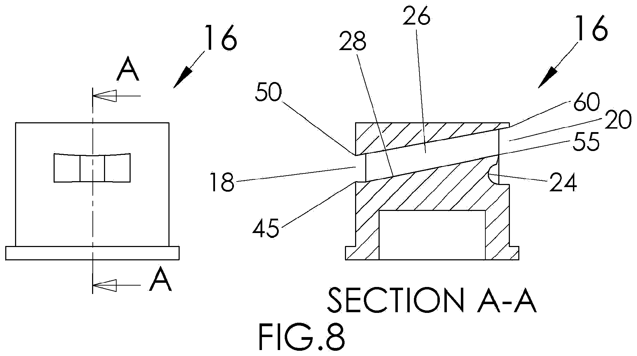

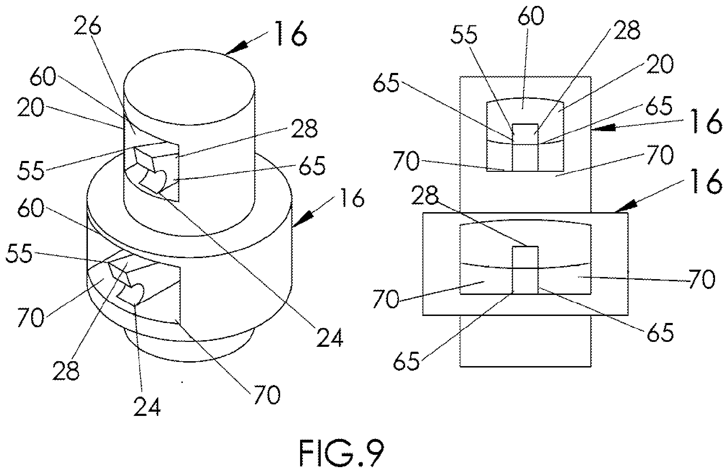

In one embodiment of the invention as exemplified in Figs. 8 and 9, the cutting member receptacle **16** comprises a channel **26** comprising of a lower channel opening **45,** an upper channel opening **50,** a lower channel outlet **55** and an upper channel outlet **60.** The distance between the lower channel opening **45** and the upper channel opening **50** is configured to receive the cutting member of choice when inserted through the cutter inlet **18** and the distance between the lower channel outlet **55** and the upper channel outlet **60** is configured to thread the cutting member of choice through the cutter outlet **20.** In another embodiment, the distance between the lower channel opening **45** and the upper channel opening **50** is configured to retain the cutting member when the rotary head is in use. In yet another embodiment, the distance between the lower channel outlet **55** and the upper channel outlet **60** is configured to retain the cutting member when the rotary head is in use. The distance between the lower channel opening **45** and the upper channel opening **50** may be the same or different as the distance between the lower channel outlet **55** and the upper channel outlet **60.** In a preferred embodiment, the distance between the lower channel opening **45** and the upper channel opening **50** is the same as the distance between the lower channel outlet **55** and the upper channel outlet **60.** In another preferred embodiment, the distance between the lower channel opening **45** and the upper channel opening **50** is configured relative to the distance between the lower channel outlet **55** and the upper channel outlet **60** to secure the cutting member when in use and easily removed when threaded through the cutter outlet **20.**

In one embodiment of the invention, the lower channel opening **45** and lower channel outlet **55** are configured relative to one another forming a ramp **28** for receiving for a cutting member, wherein the ramp may be optionally inclining or declining relative to the cutter inlet **18.** One skilled in the art may configure the ramp with respect to the embodiments of the present invention at any angle relative to the cutter inlet **18.** In one embodiment on an imaginary axis, when the lower channel opening **45** is positioned lower than the lower channel outlet **55,** a ramp **28** configured to incline relative to the cutter inlet **18** is formed as exemplified in Fig. 8. In another embodiment on an imaginary axis, when the lower channel opening **45** is positioned higher than the lower channel outlet **55,** a ramp configured to decline relative to the cutter inlet **18** is formed. In one embodiment on an imaginary axis, where the ramp is inclining relative to the cutter inlet **18,** the upper channel opening **50** is configured to be level or lower than the lower channel outlet **55.** In another embodiment on an imaginary axis, where the ramp is declining relative to the cutter inlet **18,** the lower channel opening **45** is configured to be level or higher than the upper channel outlet **60.** In a preferred embodiment on an imaginary axis, the lower channel opening **45** and the lower channel outlet **55** are positioned to secure the cutting member when in use and easily removed when threaded through the cutter outlet **20** when the rotary head is not in use.

In one embodiment (Fig. 9), a cutting member receptacle **16** is configured and positioned on top of another cutting member receptacle **16.**

Except as may be expressly otherwise indicated, the article "a" or "an" if and as used herein is not intended to limit, and should not be construed as limiting, the description or a claim to a single element to which the article refers. Rather, the article "a" or "an" if and as used herein is intended to cover one or more such elements, unless the text expressly indicates otherwise.

## Claims

1. An apparatus comprising a rotary head assembly (10), wherein the rotary head assembly (10) comprises at least one cutting member receptacle (16) wherein said cutting member receptacle (16):
(i) optionally either rotates or is fixed onto the rotary head assembly (10);
(ii) defines at least one cutter inlet (18) and at least one cutter outlet (20), wherein the cutter inlet (18) is positioned opposite the cutter outlet (20) and sized and configured to receive at least one cutting member (22); and
(iii) comprises a cutting member retainer (24), wherein the cutting member retainer (24) is positioned in between the cutter inlet (18) and the cutter outlet (20), defines a channel (26) extending from the cutter inlet (18) to the cutter outlet (20) and comprises a ramp surface (28) which is either inclining or declining, relative to a point of entry into the inlet (18) so that the cutting member (22) may be inserted into the cutter inlet (18) and engaged with the cutting member retainer (24) and retained by the cutting member receptacle (16) until it is threaded through the cutter outlet (20), **characterized in that**
the ramp surface (28) comprises at least two side edges (65) configured and sized to define at least two side channels (70) extending from the cutter inlet (18) to the cutter outlet (20) sufficient to receive a cutting member (22) through the cutter inlet (18) and retain the cutting member (22) within the cutting member retainer (24) when in use and release the cutting member (22) when threaded through the cutter outlet (20).

2. The apparatus of Claim 1, wherein the rotory head assembly (10) is configured such that at least one cutting member (22) rotates in the same and at least one cutting member (22) rotates in the opposite direction of the rotary head assembly (10) during use.

3. The apparatus of Claim 1, wherein the channel (26) is defined at least in part by a lower channel opening (45) and an upper channel opening (50) which are provided at the cutter inlet (18) side of the channel (26), and by a lower channel outlet (55) and an upper channel outlet (60) which are provided at the channel outlet (20) side of the channel (26).

4. The apparatus of Claim 3, wherein the distance between the lower channel opening (45) and the upper channel opening (50) configured to receive the cutting member (22) through the cutter inlet (18).

5. The apparatus of Claim 3, wherein the distance between the lower channel outlet (55) and the upper channel outlet (60) configured to thread the cutting member (22) through the cutter outlet (20).

6. The apparatus of Claim 3, wherein the distance between the lower channel opening (45) and the upper channel opening (50) configured to be optionally the same or different to the distance between the lower channel outlet (55) and the upper channel outlet (60).

7. The apparatus of Claim 3, wherein the distance between the lower channel opening (45) and the upper channel opening (50) is the same as the distance between the lower channel outlet (55) and the upper channel outlet (60) configured to secure the cutting member (22) when in use and easily removed when threaded through the cutter outlet (20).

8. The apparatus of Claim 3, wherein the lower channel opening (45) and lower channel outlet (55) configured relative to one another forming a ramp (28) for receiving for a cutting member (22), wherein the ramp (28) may be optionally inclining or declining relative to the cutter inlet (18).

9. The apparatus of Claim 8, wherein the ramp (28) is inclining relative to the cutter inlet (18) and the upper channel opening (50) configured to be level or lower than the lower channel outlet (55).

10. The apparatus of Claim 8, wherein the ramp (28) is declining relative to the cutter inlet (18) and the lower channel opening (50) configured to be level or higher than the upper channel outlet (60).

11. A system comprising:
the apparatus according to any one of claims 1 to 10; and
a cutting member (22, 30).

12. The system according to Claim 11, wherein at least one cutting member (22, 30) is fixed to the rotary head assembly (10).

13. The system according to any of Claims 11 or 12, wherein the cutting member (22, 30) is selected from the group consisting of a flexible, semi-rigid, and rigid material.

14. The system according to any of Claims 11 to 13, wherein the cutting member (22b, 30) is blade-like and comprises a cutting portion (35) and an attachment portion (40) configured to engage and be retained with the cutting member retainer (24, 24a, 24b, 24c, 24d).

15. The system according to Claim 14, wherein the attachment portion (40) comprises a portion, in particular of arcuate shape, with two protrusions for engaging with the cutting member retainer (24, 24a, 24b, 24c, 24d).

16. The system according to Claim 14 or 15, wherein the attachment portion (40) comprises an elongated aperture for engagement purposes.

17. A cutting member suited for the apparatus according to Claim 1,
wherein the cutting member (22b, 30) is blade-like and comprises a cutting portion (35) and an attachment portion (40) configured to engage and be retained with the cutting member retainer (24, 24a, 24b, 24c, 24d),
wherein the attachment portion comprises a portion, in particular of arcuate shape, with two protrusions for engaging with the cutting member retainer (24, 24a, 24b, 24c, 24d), wherein the attachment portion (40) comprises an elongated aperture for engagement with the ramp surface (28).

## Patentansprüche

1. Gerät, umfassend eine Drehkopfanordnung (10), wobei die Drehkopfanordnung (10) mindestens eine Schneidebestandteilbuchse (16) umfasst, wobei die Schneidebestandteilbuchse (16):
(i) gegebenenfalls entweder rotiert oder fixiert ist auf der Drehkopfanordnung (10);
(ii) mindestens einen Schneidwerkzeugeinlass (18) und mindestens einen Schneidwerkzeugauslass (20) definiert, wobei der Schneidwerkzeugeinlass (18) gegenüber dem Schneidwerkzeugauslass (20) positioniert ist und so groß und konfiguriert ist, dass er mindestens einen Schneidebestandteil (22) aufnimmt; und
(iii) einen Schneidebestandteilhalter (24) umfasst, wobei der Schneidebestandteilhalter (24) zwischen dem Schneidwerkzeugeinlass (18) und dem Schneidwerkzeugauslass (20) positioniert ist, einen Kanal (26), der sich von dem Schneidwerkzeugeinlass (18) zu dem Schneidwerkzeugauslass (20) erstreckt, definiert und eine Rampenoberfläche (28) umfasst, die entweder ansteigt oder abfällt relativ zu einem Punkt des Eintritts in den Einlass (18), so dass der Schneidebestandteil (22) in den Schneidwerkzeugeinlass (18) eingebracht und in den Schneidebestandteilhalter (24) eingreifen und durch die Schneidebestandteilbuchse (16) gehalten werden kann, bis er durch den Schneidwerkzeugauslass (20) gefädelt hat,
**dadurch gekennzeichnet, dass**
die Rampenoberfläche (28) mindestens zwei Seitenkanten (65) umfasst, die konfiguriert und so groß sind, dass sie mindestens zwei Seitenkanäle (70) definieren, die sich von dem Schneidwerkzeugeinlass (18) zu dem Schneidwerkzeugauslass (20) erstrecken, ausreichend, um einen Schneidebestandteil (22) durch den Schneidwerkzeugeinlass (18) aufzunehmen und den Schneidebestandteil (22) in dem Schneidebestandteilhalter (24) zu halten, wenn in Verwendung, und den Schneidebestandteil (22) freizugeben, wenn er durch den Schneidwerkzeugauslass (20) fädelt.

2. Gerät nach Anspruch 1, wobei die Drehkopfanordnung (10) so konfiguriert ist, dass während einer Verwendung mindestens ein Schneidebestandteil (22) in der gleichen Richtung wie die und mindestens ein Schneidebestandteil (22) in der gegensätzlichen Richtung zu der Drehkopfanordnung (10) rotiert.

3. Gerät nach Anspruch 1, wobei der Kanal (26) mindestens teilweise durch eine untere Kanalöffnung (45) und eine obere Kanalöffnung (50), welche auf der Schneidwerkzeugeinlass (18)-Seite des Kanals (26) bereitgestellt sind, und durch einen unteren Kanalauslass (55) und einen oberen Kanalauslass (60), welche auf der Kanalauslass (20)-Seite des Kanals (26) bereitgestellt sind, definiert ist.

4. Gerät nach Anspruch 3, wobei der Abstand zwischen der unteren Kanalöffnung (45) und der oberen Kanalöffnung (50) so konfiguriert ist, dass der Schneidebestandteil (22) durch den Schneidwerkzeugeinlass (18) aufgenommen wird.

5. Gerät nach Anspruch 3, wobei der Abstand zwischen dem unteren Kanalauslass (55) und dem oberen Kanalauslass (60) so konfiguriert ist, dass der Schneidebestandteil (22) durch den Schneidwerkzeugauslass (20) fädelt.

6. Gerät nach Anspruch 3, wobei der Abstand zwischen der unteren Kanalöffnung (45) und der oberen Kanalöffnung (50) so konfiguriert ist, dass er gegebenenfalls gleich oder unterschiedlich ist zu dem Abstand zwischen dem unteren Kanalauslass (55) und dem oberen Kanalauslass (60).

7. Gerät nach Anspruch 3, wobei der Abstand zwischen der unteren Kanalöffnung (45) und der oberen Kanalöffnung (50) gleich ist zu dem Abstand zwischen dem unteren Kanalauslass (55) und dem oberen Kanalauslass (60), konfiguriert zum Sichern des Schneidebestandteils (22), wenn in Verwendung, und einfach entfernt, wenn er durch den Schneidwerkzeugauslass (20) fädelt.

8. Gerät nach Anspruch 3, wobei die untere Kanalöffnung (45) und der untere Kanalauslass (55) relativ zueinander so konfiguriert sind, dass sie eine Rampe (28) zum Aufnehmen eines Schneidebestandteils (22) bilden, wobei die Rampe (28) gegebenenfalls relativ zu dem Schneidwerkzeugeinlass (18) ansteigt oder abfällt.

9. Gerät nach Anspruch 8, wobei die Rampe (28) relativ zu dem Schneidwerkzeugeinlass (18) ansteigt und die obere Kanalöffnung (50) so konfiguriert ist, dass sie auf derselben Höhe wie oder niedriger als der untere Kanalauslass (55) liegt.

10. Gerät nach Anspruch 8, wobei die Rampe (28) relativ zu dem Schneidwerkzeugeinlass (18) abfällt und die untere Kanalöffnung (50) so konfiguriert ist, dass sie auf derselben Höhe wie oder höher als der obere Kanalauslass (60) liegt.

11. System, umfassend:
das Gerät gemäß einem der Ansprüche 1 bis 10; und
einen Schneidebestandteil (22, 30).

12. System gemäß Anspruch 11, wobei mindestens ein Schneidebestandteil (22, 30) an der Drehkopfanordnung (10) fixiert ist.

13. System gemäß einem der Ansprüche 11 oder 12, wobei der Schneidebestandteil (22, 30) aus der Gruppe ausgewählt ist, welche aus einem flexiblen, halbstarren und starren Material besteht.

14. System gemäß einem der Ansprüche 11 bis 13, wobei der Schneidebestandteil (22b, 30) klingenähnlich ist und einen Schneideanteil (35) und einen Befestigungsanteil (40), konfiguriert zum Eingreifen in den und Gehaltenwerden von dem Schneidebestandteilhalter (24, 24a, 24b, 24c, 24d), umfasst.

15. System gemäß Anspruch 14, wobei der Befestigungsanteil (40) einen Anteil, insbesondere in Bogenform, mit zwei Vorsprüngen zum Eingreifen in den Schneidebestandteilhalter (24, 24a, 24b, 24c, 24d) umfasst.

16. System gemäß Anspruch 14 oder 15, wobei der Befestigungsanteil (40) einen länglichen Durchbruch für Eingreifzwecke umfasst.

17. Schneidebestandteil, geeignet für das Gerät gemäß Anspruch 1, wobei der Schneidebestandteil (22b, 30) klingenähnlich ist und einen Schneideanteil (35) und einen Befestigungsanteil (40), konfiguriert zum Eingreifen in den und Gehaltenwerden von dem Schneidebestandteilhalter (24, 24a, 24b, 24c, 24d), umfasst, wobei der Befestigungsanteil einen Anteil, insbesondere in Bogenform, mit zwei Vorsprüngen zum Eingreifen in den Schneidebestandteilhalter (24, 24a, 24b, 24c, 24d) umfasst, wobei der Befestigungsanteil (40) einen länglichen Durchbruch zum Eingreifen in die Rampenoberfläche (28) umfasst.

## Revendications

1. Appareil comprenant un ensemble-tête rotatif (10), l'ensemble-tête rotatif (10) comprenant au moins un logement d'organe de coupe (16), dans lequel ledit logement d'organe de coupe (16) :
(i) éventuellement soit tourne soit est fixé sur l'ensemble-tête rotatif (10) ;
(ii) définit au moins une entrée d'outil de coupe (18) et au moins une sortie d'outil de coupe (20), dans lequel l'entrée d'outil de coupe (18) est positionnée de manière opposée à la sortie d'outil de coupe (20) et dimensionnée et configurée pour recevoir au moins un organe de coupe (22) ; et
(iii) comprend un élément de retenue d'organe de coupe (24), dans lequel l'élément de retenue d'organe de coupe (24) est positionné entre l'entrée d'outil de coupe (18) et la sortie d'outil de coupe (20), définit un canal (26) s'étendant de l'entrée d'outil de coupe (18) à la sortie d'outil de coupe (20) et comprend une surface en rampe (28) qui est soit en pente vers le haut soit en pente vers le bas, par rapport à un point d'entrée dans l'entrée (18) de sorte que l'organe de coupe (22) puisse être inséré dans l'entrée d'outil de coupe (18) et mis en prise avec l'élément de retenue d'organe de coupe (24) et retenu par le logement d'organe de coupe (16) jusqu'à ce qu'il soit enfilé à travers la sortie d'outil de coupe (20),
**caractérisé en ce que**
la surface en rampe (28) comprend au moins deux bords latéraux (65) configurés et dimensionnés pour définir au moins deux canaux latéraux (70) s'étendant de l'entrée d'outil de coupe (18) à la sortie d'outil de coupe (20) suffisants pour recevoir un organe de coupe (22) à travers l'entrée d'outil de coupe (18) et retenir l'organe de coupe (22) à l'intérieur de l'élément de retenue d'organe de coupe (24) lors de l'utilisation et libérer l'organe de coupe (22) lorsqu'il est enfilé à travers la sortie d'outil de coupe (20).

2. Appareil selon la revendication 1, dans lequel l'ensemble-tête rotatif (10) est configuré de telle sorte qu'au moins un organe de coupe (22) tourne dans le même sens que l'ensemble-tête rotatif (10) et qu'au moins un organe de coupe (22) tourne dans le sens opposé pendant l'utilisation.

3. Appareil selon la revendication 1, dans lequel le canal (26) est défini au moins en partie par une ouverture inférieure de canal (45) et une ouverture supérieure de canal (50) qui sont prévues au niveau du côté de l'entrée d'outil de coupe (18) du canal (26), et par une sortie inférieure de canal (55) et une sortie supérieure de canal (60) qui sont prévues au niveau du côté de la sortie de canal (20) du canal (26).

4. Appareil selon la revendication 3, dans lequel la distance entre l'ouverture inférieure de canal (45) et l'ouverture supérieure de canal (50) est configurée pour recevoir l'organe de coupe (22) à travers l'entrée d'outil de coupe (18).

5. Appareil selon la revendication 3, dans lequel la distance entre la sortie inférieure de canal (55) et la sortie supérieure de canal (60) est configurée pour enfiler l'organe de coupe (22) à travers la sortie d'outil de coupe (20).

6. Appareil selon la revendication 3, dans lequel la distance entre l'ouverture inférieure de canal (45) et l'ouverture supérieure de canal (50) est configurée pour être éventuellement la même que la distance entre la sortie inférieure de canal (55) et la sortie supérieure de canal (60) ou différente de cette distance.

7. Appareil selon la revendication 3, dans lequel la distance entre l'ouverture inférieure de canal (45) et l'ouverture supérieure de canal (50) est la même que la distance entre la sortie inférieure de canal (55) et la sortie supérieure de canal (60) configurées pour fixer l'organe de coupe (22) lors de l'utilisation et retirées facilement lors de l'enfilement à travers la sortie d'outil de coupe (20).

8. Appareil selon la revendication 3, dans lequel l'ouverture inférieure de canal (45) et la sortie inférieure de canal (55) sont configurées l'une par rapport à l'autre en formant une rampe (28) pour la réception d'un organe de coupe (22), la rampe (28) pouvant éventuellement être en pente vers le haut ou en pente vers le bas par rapport à l'entrée d'outil de coupe (18) .

9. Appareil selon la revendication 8, dans lequel la rampe (28) est en pente vers le haut par rapport à l'entrée d'outil de coupe (18) et l'ouverture supérieure de canal (50) est configurée pour être au même niveau que la sortie inférieure de canal (55) ou plus basse que celle-ci.

10. Appareil selon la revendication 8, dans lequel la rampe (28) est en pente vers le bas par rapport à l'entrée d'outil de coupe (18) et l'ouverture inférieure de canal (50) est configurée pour être au même niveau que la sortie supérieure de canal (60) ou plus élevée que celle-ci.

11. Système comprenant :
l'appareil selon l'une quelconque des revendications 1 à 10 ; et
un organe de coupe (22, 30).

12. Système selon la revendication 11, dans lequel au moins un organe de coupe (22, 30) est fixé à l'ensemble-tête rotatif (10).

13. Système selon l'une quelconque des revendications 11 ou 12, dans lequel l'organe de coupe (22, 30) est sélectionné parmi le groupe consistant en un matériau souple, semi rigide et rigide.

14. Système selon l'une quelconque des revendications 11 à 13, dans lequel l'organe de coupe (22b, 30) est de type lame et comprend une portion de coupe (35) et une portion de fixation (40) configurée pour venir en prise avec l'élément de retenue d'organe de coupe (24, 24a, 24b, 24c, 24d) et être retenue à l'aide de celui-ci.

15. Système selon la revendication 14, dans lequel la portion de fixation (40) comprend une portion, en particulier de forme arquée, dotée de deux saillies pour venir en prise avec l'élément de retenue d'organe de coupe (24, 24a, 24b, 24c, 24d).

16. Système selon la revendication 14 ou 15, dans lequel la portion de fixation (40) comprend un orifice allongé à des fins d'entrée en prise.

17. Organe de coupe approprié à l'appareil selon la revendication 1,
dans lequel l'organe de coupe (22b, 30) est de type lame et comprend une portion de coupe (35) et une portion de fixation (40) configurée pour venir en prise avec l'élément de retenue d'organe de coupe (24, 24a, 24b, 24c, 24d) et être retenue à l'aide de celui-ci,
dans lequel la portion de fixation comprend une portion, en particulier de forme arquée, dotée de deux saillies pour venir en prise avec l'élément de retenue d'organe de coupe (24, 24a, 24b, 24c, 24d), dans lequel la portion de fixation (40) comprend un orifice allongé à des fins d'entrée en prise avec la surface en rampe (28).
